# EUROPÄISCHE PATENTANMELDUNG

(11) **EP 0 755 645 A1**
(43) Veröffentlichungstag der Anmeldung: **29.01.1997**
(21) Anmeldenummer: 96111835.3
(22) Anmeldetag: 23.07.1996
(51) Int. Cl.: A47J 27/18, A47J 27/00

(54) **Garvorrichtung**

(30) Priorität: 26.07.1995 DE 19527242
(71) Anmelder: Dr. Carisius Christensen GmbH, 61440 Oberursel (DE)
(72) Erfinder: Wich, Robert, 61440 Oberursel (DE)

(57) **Zusammenfassung**

Es wird eine Garvorrichtung, insbesondere zum Garen von Teigwaren angegeben, bestehend aus einem einseitig verschlossenen langgestreckten Gefäß gleichförmigen Querschnitts, und dadurch gekennzeichnet, daß wenigstens die den Querschnitt bestimmenden Wände des Gefäßes (1) aus einem Werkstoff geringer Wärmeleitfähigkeit bestehen.

## Beschreibung

Die Erfindung betrifft eine Garvorrichtung nach dem Oberbegriff des Anspruchs 1.

Es ist bekannt und üblich, haushaltsübliche Mengen stärkehaltiger Lebensmittel, wie Nudeln, Reis und Kartoffeln, in Kochtöpfen zu garen, deren Gesamtinhalt wesentlich größer ist als das Volumen des Kochgutes. Dabei wird die Menge des Wassers im Kochtopf im allgemeinen so reichlich bemessen, daß das Kochgut davon bedeckt ist und der Garvorgang durch Zufuhr von äußerer Wärme eingeleitet und durchgeführt wird.

Insbesondere bei der Zubereitung langgestreckter Teigwaren, wie Makkaroni und ganz besonders Spaghetti, ergibt sich durch die runde Form des Topfes, die mittelbare Erhitzung des Kochwassers unter Zwischenschaltung des Topfbodens und die Notwendigkeit, das Kochgut mechanisch zu bewegen, ein unerwünschter Energieverlust und ein beträchtlicher Wasserüberschuß, der beim Sieden den Gesamtenergieverbrauch erhöht und vor allem zum Ausschwemmen von Geschmacksstoffen aus dem Kochgut führt.

Es ist daher bereits ein Kochgerät für haushaltsübliche Mengen von Lebensmitteln vorgeschlagen worden (DE-GM 93 01 422), mit dem energiesparend eine schonende und aromaerhaltende Zubereitung auch stärkehaltiger Lebensmittel selbst am Tisch erfolgen kann und außerdem einfach und aus wenigen Bauteilen aufgebaut und leicht zu reinigen ist.

Das bekannte Kochgerät zum Garen von Lebensmitteln weist dazu im einzelnen einen trogförmigen Behälter, eine an einer Stirnseite des Behälters befestigbaren Heizeinrichtung und einen in den Behälter einhängbaren Siebkorb auf. Durch die Maßnahmen ergibt sich zwar der Vorteil, daß das Kochgerät leicht zu reinigen ist, es verbleibt jedoch der Nachteil der kostenaufwendigen und wartungsbedürftigen Heizeinrichtung.

Der Erfindung liegt daher die Aufgabe zugrunde, eine Garvorrichtung anzugeben, mit der ein Garen von Lebensmitteln, insbesondere von Teigwaren, ohne fortwährende Zufuhr von äußerer Wärmeenergie bewerkstelligt werden kann.

Die Lösung dieser Aufgabe erfolgt mit den im kennzeichnenden Teil des Anspruchs 1 angegebenen Maßnahmen.

Es hat sich nämlich überraschend gezeigt, daß es einer ständigen Zufuhr von Wärme zu dem Gargefäß während des Garvorgangs gar nicht bedarf, wenn die in der Flüssigkeit und dem Kochgut enthaltene Wärmeenergie am Verlassen des Gefäßes ganz oder zum größten Teil gehindert ist.

So läßt sich beispielsweise der Garvorgang ohne weitere Zufuhr von Wärmeenergie erfolgreich durchführen, indem Flüssigkeit und Kochgut in ein Dewar'sches Gefäß, im allgemeinen Sprachgebrauch als Thermosbehälter bezeichnet, eingebracht werden.Das Gefäß kann für die Dauer der vorgegebenen Garzeit verschlossen werden, für den Erfolg ist dies aber nicht erforderlich.

Wegen der teueren Herstellung und der Empfindlichkeit von doppelwandigen und dazwischen luftleer gepumpten Glasbehälter ist es wünschenswert, diese aufwendige Technik zu vermeiden. Es wurde nun überraschend gefunden, daß der angestrebte Zweck, nämlich das Garen von Lebensmitteln ohne dauernde Zufuhr von Wärmeenergie während des Garvorgangs, vorteilhaft auch erreicht wird, wenn die Wandungen des Gargefäßes aus einem Werkstoff mit niedrigem Wärmeleitwert bestehen.

Die erfindungsgemäße Garvorrichtung, insbesondere zum Garen von Teigwaren, bestehend aus einem einseitig verschlossenen langgestreckten Gefäß gleichförmigen Querschnitts, ist daher im einzelnen dadurch gekennzeichnet, daß wenigstens die den Querschnitt bestimmenden Wände des Gefäßes aus einem Werkstoff geringer Wärmeleitfähigkeit bestehen.

Durch die erfindungsgemäßen Maßnahmen ergibt sich der Vorteil, daß während des Garvorgangs auf eine äußere Beheizung der Garvorrichtung verzichtet werden kann.

Ferner ist vorteilhaft, daß auch bei geringer Aufmerksamkeit die Teigwaren nicht zu weich kochen können, sondern immer "al dente" gegart sind. Vorteilhafte Weiterbildungen und Ausgestaltungen der Erfindung ergeben sich aus den Unteransprüchen.

Eine vorteilhafte Weiterbildung der Erfindung besteht darin, daß die Wärmeleitfähigkeit des Werkstoffs gleich oder kleiner als 0,25 Watt je Meter und Kelvin ist.

Dadurch findet auch bei geringer Wandstärke nur ein geringer Wärmeaustausch mit der Umgebung statt.

Eine andere Weiterbildung der Erfindung besteht darin, daß der Werkstoff transparent ist. Hierdurch läßt sich der Garvorgang ohne Öffnen der Garvorrichtung beobachten.

Es hat sich gemäß einer anderen Weiterbildung der Erfindung der Werkstoff Polymethylmetacrylat als besonders geeignet gezeigt. Dieses Material ist transparent, hitzebeständig und lebensmittelecht.

Vorteilhaft erfolgt bei der erfindungsgemäßen Garvorrichtung die Abdichtung des Gefäßes durch Boden und Deckel mit eingelegten Dichtungsringen. Dadurch läßt sich die Garvorrichtung in einfacher Weise auch liegend benutzen und erlaubt darüber hinaus leicht die Zerlegung für den Reinigungsvorgang.

Ein Ausführungsbeispiel der Erfindung ist in der Zeichnung dargestellt und in der nachfolgenden Beschreibung näher erläutert.

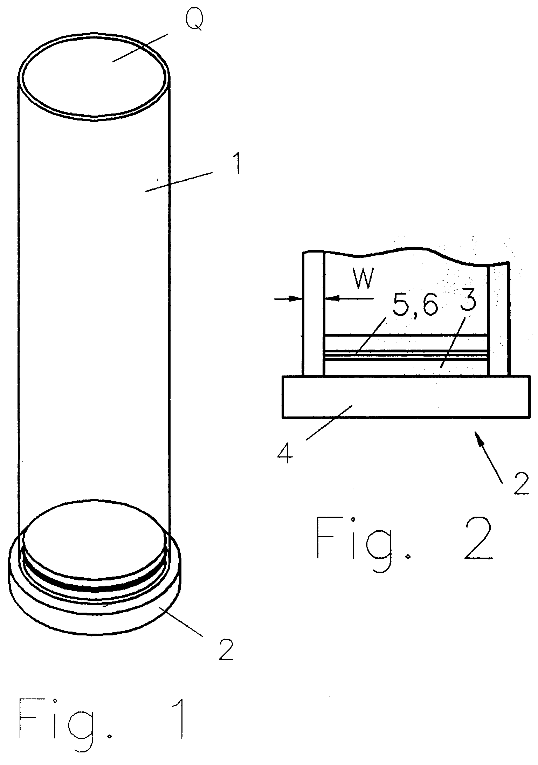

Es zeigen Fig. 1 schematisch die Garvorrichtung in perspektivischer Darstellung, Fig. 2 ebenfalls schematisch ein Detail aus Fig. 1 in größerem Maßstab.

Die Garvorrichtung nach Fig. 1 besteht aus einem langgestreckten Rohr 1 mit gleichförmigem Querschnitt Q und gleichförmiger Wandstärke W über die gesamte Länge. An beiden Enden ist das Rohr 1 eben geschnitten und einseitig durch einen Boden 2 verschlossen. Der Boden 2 ist gestuft ausgeführt, wobei der Bund 3 an den Querschnitt des Rohres 1 angepaßt ist, während der Flansch 4 eine vergrößerte Aufstandsfläche für die Garvorrichtung darstellt. Der Boden 2 kann mit dem Rohr 1 dauerhaft verbunden sein, jedoch ist es für die Reinigung der Garvorrichtung vorteilhaft, wenn diese zerlegbar ist. Der Boden 2 weist daher an seinem Bundteil 3 eine umlaufende Nut 5 auf, in die ein Rundschnurring 6 eingelegt ist. Dieser Rundschnurring 6 bewirkt die Abdichtung des Bodens 2 gegen das Rohr 1, so daß keine Flüssigkeit an der Verbindungsstelle austreten kann. In gleicher Weise wie der Boden 2 kann ein (nicht dargestellter) Deckel gefertigt sein, so daß die Garvorrichtung lageunabhängig benutzbar ist.

Damit möglichst wenig der im Kochwasser und Gargut gespeicherten Wärme nach außen gelangt und somit für den Garvorgang verloren ist, ist der Werkstoff für das Rohr 1 und gegebenenfalls für Boden und Deckel nach seinem Wärmeleitwert Lambda ausgewählt. Dieser soll kleiner als 0,5 Watt je m und K, vorzugsweise kleiner als 0,25 Watt je m und K sein.

Da die Garvorrichtung zumindest teilweise transparent sein soll, damit der Garverlauf beobachtbar bleibt, ist als Werkstoff für das Rohr 1 Polymethylmetacrylat vorteilhaft. Dieser Werkstoff vereinigt gute Transparenz und Lebensmittelbeständigkeit mit geringer Wärmeleitfähigkeit und ist unter anderem unter dem Handelnamen "Plexiglas" erhältlich.

Boden und Deckel können aus dem gleichen Werkstoff, gegebenenfalls eingefärbt, gefertigt sein. Wegen der gegenüber der Rohrinnenfläche geringeren Berührungsfläche von Boden und Deckel ist die Wahl des Werkstoffs jedoch nicht kritisch.

Schließlich läßt sich der Wärmeverlust der Garvorrichtung während der Garzeit noch durch die Wahl der geeigneten Wandstärke beeinflussen. Als vorteilhaft hat sich eine Wandstärke von 4 mm für das Rohr erwiesen.

Es ist nicht erforderlich, daß das Rohr 1 den gezeigten Kreisringquerschnitt aufweist, vielmehr ist jede Querschnittsform Q denkbar und liegt im Rahmen der Erfindung.

Zum Gebrauch wird das Rohr 1 der Garvorrichtung zunächst am unteren Ende mit dem Boden 2 verschlossen und zu etwa 2/3 mit kochendem Wasser gefüllt. Danach wird die vorgesehene Menge Teigwaren zugegeben und die Garzeit abgewartet. Nach dem Abgießen der Flüssigkeit sind die Teigwaren fertig zum Verzehr.

In einer ausgeführten Form ist das Rohr 320 mm lang bei einem Außendurchmesser von 80 mm und einer Wandstärke von 3 mm. Dabei ergibt sich eine Füllhöhe von 220 mm für 1 l Wasser, ausreichend für 250 g Teigwaren, die nach ca. 20 min. fertig gegart sind.

## Patentansprüche

1. Garvorrichtung, insbesondere zum Garen von Teigwaren, bestehend aus einem einseitig verschlossenen langgestreckten Gefäß gleichförmigen Querschnitts, dadurch gekennzeichnet, daß wenigstens die den Querschnitt bestimmenden Wände des Gefäßes (1) aus einem Werkstoff geringer Wärmeleitfähigkeit bestehen.

2. Garvorrichtung nach Anspruch 1, dadurch gekennzeichnet, daß die Wärmeleitfähigkeit des Werkstoffs gleich oder kleiner als 0,25 Watt je Meter und Kelvin ist.

3. Garvorrichtung nach Anspruch 1 oder 2, dadurch gekennzeichnet, daß der Werkstoff transparent ist.

4. Garvorrichtung nach einem der Ansprüche 1 bis 3, dadurch gekennzeichnet, daß der Werkstoff ein Polymethylmetacrylat ist.

5. Garvorrichtung nach einem der Ansprüche 1 bis 4, dadurch gekennzeichnet, daß auch der Boden (2) oder Boden und Deckel des Gefäßes (1) aus gleichartigem Werkstoff gefertigt sind.

6. Garvorrichtung nach Anspruch 5, dadurch gekennzeichnet, daß der Boden (2) des Gefäßes (1) und gegebenenfalls der Deckel mittels einer Dichtung (6) flüssigkeitsdicht abdichten.
